# EUROPEAN PATENT APPLICATION

(11) **EP 4 282 264 A1**
(43) Date of publication of application: **29.11.2023**
(21) Application number: 22020430.9
(22) Date of filing: 07.09.2022
(51) Int. Cl.: A01K 97/02

(54) **A DEVICE FOR CASTING BAITS IN FISHING**

(30) Priority: 27.05.2022 HR P20220697
(71) Applicant: Radek, Martin, 10430 Samobor (HR)
(72) Inventor: Radek, Martin, 10430 Samobor (HR)
(74) Representative: Strniscak, Tomislav

(57) **Abstract**

The device for casting baits in fishing 1 disclosed in the present invention comprises the inner container 100 and the outer container 200. The inner container 100 has a lateral opening for placing baits 105, whereas on the opposite lateral sides of the outer container 200 there is a single outer container opening 205 on each side through which the inner container 100 can be inserted into the outer container 200. When the inner container 100 is in the outer container 200, the inner container 100 can be rotated inside the outer container 200 so that the inner container 100 can be in a position to close the outer container opening 205 for placing baits, and when the present device is immersed under water, rotation of the inner container 100 inside the outer container 200 occurs, and the bait is released from the inner container 100 into the water.

## Description

### FIELD OF THE INVENTION

The present invention relates to the fishing accessories and fishing, more precisely to a device intended for a fisherman to cast a bait or fish feed, in particular, ground bait into a specific place in the water.

### TECHNICAL PROBLEM

The inventor has considered the problem of how to construct a device for casting baits in fishing or fish feed, which will reliably open when in contact with the water surface and will not open due to impacts and the like, and will enable easy retrieving from the water once the device is opened and the bait falls out of it into the water, especially in conditions when waves are present on the water. Thus, the inventor aimed to construct a device that will ensure a straight, stable, and uniform retrieving out of the said from the water.

Namely, the previous devices for casting baits in fishing are made in such a way that they consist of two halves that open when in contact with water through a hinge system, and so the open device becomes extremely unstable when it is retrieved by a fishing reel from the water- it starts bouncing on the water surface and the retrieving is not uniform. Namely, if the device bounces on the water surface when it is retrieved out of the water, resistance changes, and the reeling of the mainline on the reel is not uniform and often creates knots, damage, and problems and the next time it is cast, the mainline gets tangled and finally breaks.

The second problem that the inventor solved with the present invention refers to the flotation of the device on the water in case of a break of the mainline that connects the fishing rod and the device since in existing devices in such situations due to the weight of the bait inside of the device sinking occurs.

The third problem that the inventor solved is the reconstruction of the container opening system and the bait release into the water in a way to avoid the opening of the container when it touches the bank or the ground when it is cast.

The fourth problem that the inventor solved is to enable full filling of the device with baits since the existing devices can only partially be filled with baits, and the reason is that the existing devices made from two parts are divided lengthwise so only one half can be filled with baits.

The fifth problem that the inventor solved is the issue of eliminating feed/baits from the device completely once it is opened. In existing devices, the baits/fish feed is often stuck to the inner wall.

Another problem that the inventor solved is the easy and simple filling of the device with baits.

### PRIOR ART

Devices for casting baits in fishing have already existed for the last twenty years. They usually have a plastic body and an aerodynamic shape so that the fisherman can cast them as far as possible from the bank. However, the present solutions are structurally completely different from what is presented in this invention. For example, the invention contained in patent application WO 2009/098507 resembles the present invention with its outer shape, however, the filling mechanism of the device with bait and the way of functioning of the device itself is completely different, since the device disclosed in that invention consists of two halves connected by a hinge system, and once the device is opened it is retrieved out of the water opened, and it bounces on the water during the time of retrieving and is particularly unstable if there are waves. Concerning the possibility of filling the same container volume with baits, the solution found by the inventor enables a much better filling of the container with baits than it is possible for the device disclosed in the patent application WO 2009/098507. Through the prior art search the inventor hasn't encountered, nor is he familiar with the existence of a solution where the device for casting baits in fishing would contain an outer and an inner container positioned in relation to one another in such a way that the inner container can be rotated inside the outer container, in a way that is disclosed in the present invention.

### BRIEF SUMMARY OF THE PRESENT INVENTION

The device for casting baits in fishing contains two basic parts, namely an inner container and an outer container, wherein the inner container is stably inserted into the outer container. The inner container has a lateral opening for placing baits, whereas on the opposite lateral sides of the outer container there is a single outer container opening on each side. Through this opening, the inner container can also be inserted into the outer container. When the inner container is in the outer container, the inner container can be rotated inside the outer container so that the inner container can be in a position to close the outer container opening for placing baits. When the present device is immersed under water due to the buoyancy force of the water influencing a torsion spring via trigger, rotation of the inner container inside the outer container occurs, openings of the outer and inner container overlap, and the bait is released from the inner container into the water. The openings on the containers are approximately the same shape.

The tail that ensures stability in the flight of this device for casting baits in fishing has at least three designed fins. There is a chamber filled with air inside the tail which prevents the device from sinking. On the tail, there is a designed reception for the inner container on which there is a groove for the torsion spring. The inner container and the tail are connected via reception for the inner container when the inner container is inside the outer container. The tail reception emerges elongated from the rear of the inner container outwards in the direction of the axis of the inner container. There are at least two hooks designed at the tail reception so that the tail and the inner container are connected by hooks that are attached to the reception for the inner container. At the rear of the outer container, there is an opening through which the tail reception comes out of the outer container. The trigger is made in the shape of a narrow cone with a ring and it contains four grooves and two trigger extensions. A sealing ring, a torsion spring, a trigger, and a compression spring are interposed between the inner container and the tail so that the reception for the inner container passes through them. Between the trigger and the outer container, there is a torsion spring attached to the groove for the torsion spring and the anchor pin. There are four symmetrically arranged ramps at the rear of the inner container made in the bulge shape along the rim of the rear part so that there is a space between them into which the trigger extensions enter. On the front part of the inner container and the front part of the outer container, a plug opening is designed into which the plug enters which has the function of firmly fixing the inner container with the outer container.

An essential part of this device is the wing, wherein on the inner container, there is a channel designed for directing water flow with a wing seat into which the wing is inserted. The wing placed in the channel for directing water flow in the inner container using the lift force allows the device to be raised out of the water easily. The principle is the same as that of an airplane where wings enable flying due to the lift force applied to them. The air that hits the wings in flight has a higher speed and a lower pressure on the upper half of the wings, while the lower half has a lower speed and a higher pressure which leads to lift and flying. The same effect is present when the wing pass through water. In the present invention, the disclosed wing produces a lift (similar to the wing of the airplane) that raises most of the device for casting baits from the water. Like an aircraft wings, it has an aerodynamic profile form that in a situation where water flows over and below it, it creates pressure differences on the upper and lower surface. With parallel flow over wings (foils) the pressure is negative on the upper surface and positive on the lower surface, and this generates a lifting force vertical to the inflow and the drag force, parallel to the inflow of water. Such wings are used on aircraft wings, propeller blades, pump blades, fan/turbine blades, and vessels on hydrofoil crafts. The very design of the wings and the tunnel, which is here the channel for directing water flow, creates a calm and stable retrieving with constant resistance, even on turbulent water. The wing is placed in the channel for directing water flow in the inner container, and in terms of length it is located on the widest part of the device, and when the device is retrieved out of the water it is in contact with water.

When retrieving the device from the water, the water flows through two openings at the rear part of the inner container and two edge openings at the rear part of the outer container which serve to flush the contents of the device through the main discharge openings. When the device is in the closed state, the said openings at the rear of the inner container are shifted concerning the two edge openings at the rear of the outer container by 90 degrees, and when the device is closed the water cannot pass through the said openings.

Trigger extensions pass through the openings of the outer container and are strongly pointed into the rear of the inner container, wherein when the tail and the inner container are rotated, the trigger extensions climb over the ramps until they cross the ramp entirely and jump on the flat part where they also lock the current closed state.

When the device falls and is immersed in the water, the water moves the trigger and the trigger extensions rise above the ramps and allow the torsion spring to return the device to its initial (open) state, where the trigger extensions are again strongly pointed into the other two ramps of the inner container and ensure the current position.

In principle, the inner container is approximately ¾ of its surface closed, while approximately ¼ of the surface is open, and the bait is placed in that container through this opening. Throughout the entire length of the inner container, there is a channel for directing water flow when it is retrieved out. The wing is made as a segment in the shape of a cube with hooks which is mounted on the inner container, to maintain an easier and stable retrieving from the water. The outer container has 2/4 of its surface closed, while the remaining 2/4 of the surface is open so that it has two symmetrically positioned openings that correspond to the surface of the inner container opening. The outer container has further a plug opening at the front and an opening at the rear through which the tail reception passes. There are additional holes at the rear where trigger extensions are inserted and these holes serve to flush the inside of the device and its contents when the device is in its open position. At the rear end, there is a pin for anchoring the torsion spring. On the outside, there are two ribs on each side that extend longitudinally along the outer container, and these ribs on the outer container enable an easier and better holding of the device in the hand and water rejection during retrieving. The plug is made in form of a mushroom and is fixed by being pressed into the outer container, which also centers and connects the inner container with the outer container and enables a smooth rotation of the inner container around its axis inside the outer container. The torsion spring is made from stainless steel wires of a certain thickness and a certain number of windings and its function is to strain the inner container relative to the outer container. The trigger from the outside contains ribs (grooves) on 2/4 of the surface and one ring at the very end which extends across the entire trigger diameter, where resistance is created when in contact with water, and it moves the trigger towards the tail and the tension of the torsion spring is released which rotates the inner container relative to the outer container by 90°. The compression spring is made of stainless steel wire of a certain thickness and a certain number of windings, and its purpose is to keep the trigger 300 tense in the zero position. The tail usually contains four fins and a hole at the rear end for easier mounting of the mainline from the device to the fishing rod, i.e. reel, also after mounting the tail on the inside, an air space is created which is used as a float that holds the entire device on the water surface (it doesn't sink to the bottom) in case there is a mainline break. There is an additional groove on the tail where the other side of the torsion spring is anchored, and at the same time, it prevents the tail from rotating around the inner container.

Regarding the trigger itself, in earlier solutions the said is present in the front part of the device, and the problem occurs when the fisherman is in the casting position and the device touches the ground or the bank before it is cast, which is quite common, and the device opens and all the contents fall out before casting the device, which is undesirable. In the present invention, the trigger is located at the rear of the device and the said opens only and exclusively when in contact with water, if it touches the ground or the bank while casting it, the device will not open but can normally be cast to the desired location in water where it will open in contact with water and empty its contents. There is an additional problem with existing solutions due to the trigger located in the nose of the rocket because it disrupts the aerodynamics due to the space it occupies, and this part cannot be filled with feed (reduced capacity regarding the overall volume of the device) but remains empty space (air). In the case of the device disclosed herein the entire front part of the device is available for filling and thus the center of gravity, flying, and aerodynamics are significantly improved.

Regarding the filling capacity, the existing devices can only partially be filled with baits or fish feed, the device is lengthwise divided into two equal parts and only one half can be filled with feed, while the other half remains empty. In the disclosed device in the present invention, 3/4 of the ellipsoid is closed, while 1/4 of the ellipsoid is open, and thus the capacity of the feed container is fully usable, the end result being that a much smaller volume can be filled with the same amount of feed, which again ultimately affects the aerodynamics. In the tail of this device, there is a chamber, i.e. an air reservoir which holds the device on the water surface in case of a mainline break. The device can be hooked and pulled ashore or after a while, it simply floats ashore and can be pulled out again. Existing solutions are such that in case of a mainline break, the device sinks to the bottom of the lake and stays there, which becomes a long-term problem of nature pollution.

The device disclosed herein has holes at the rear part of the inner and outer container that serve for flushing the contents out of the container during retrieving. At the rocket's rear, there are two holes through which water enters during rocket retrieving and thus flushes the contents of the container. This is not the case with existing solutions and occasionally the feed stays stuck to the inner part of the container. The device for casting baits in fishing does not have a hatch as earlier solutions, but it has an opening that is entirely free and accessible for filling and does not require additional tools (spoons, ladles..etc.) to fill the container with baits. The existing solutions have a hatch that is always in the way and is clumsy to handle, hold or fill. This device has a container that can be filled with one hand, the feed can be easily grabbed, and the container closes after a 90-degree rotation.

The advantage of this device is a straight, stable, and uniform retrieving from the water. Due to its design (it hasn't got a hatch) the device is retrieved out of the water in a straight, stable manner with constant resistance on the rod/reel. While in existing solutions the device bounces on the water surface during retrieving, and by doing so the resistance changes and the reeling of the mainline on the reel is not uniform and often creates knots, damage, and problems, and in the next cast the mainline gets tangled and it finally breaks.

### BRIEF DESCRIPTION OF THE DRAWINGS

The accompanying drawings which are incorporated into the description and which form part of the description of the invention, illustrate the best so far considered embodiment of the invention and help to explain the basic principles of the invention. The present invention is not in any way limited by the drawings which are an integral part of the present invention.

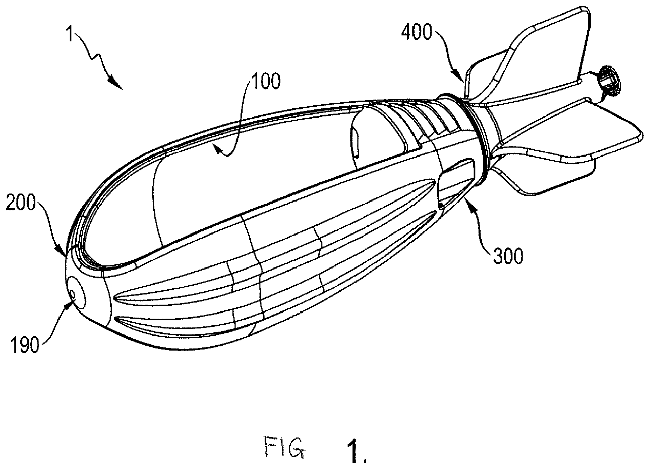

Figure 1. A view of the assembled device for casting baits in fishing

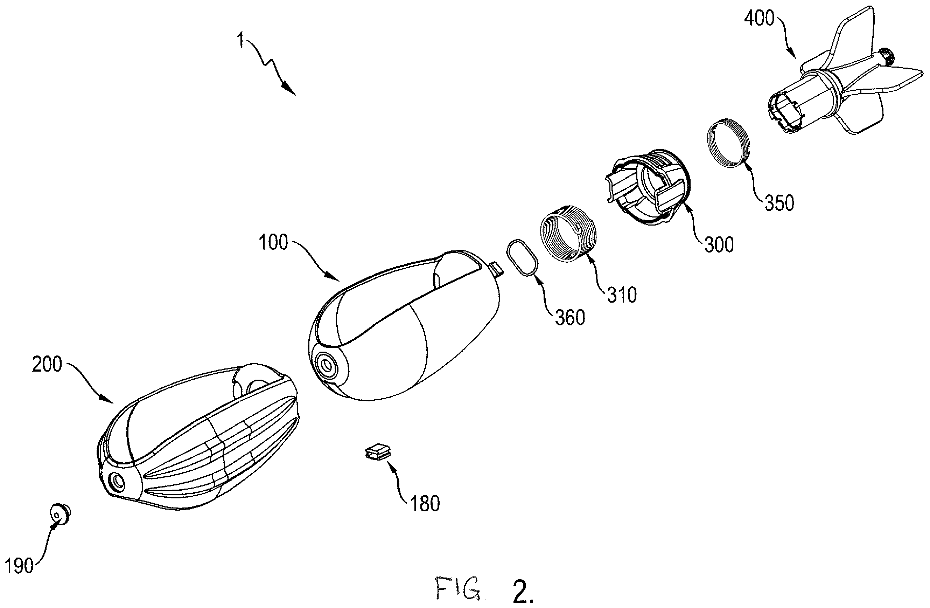

Figure 2. A view of the basic parts of the device for casting baits in fishing

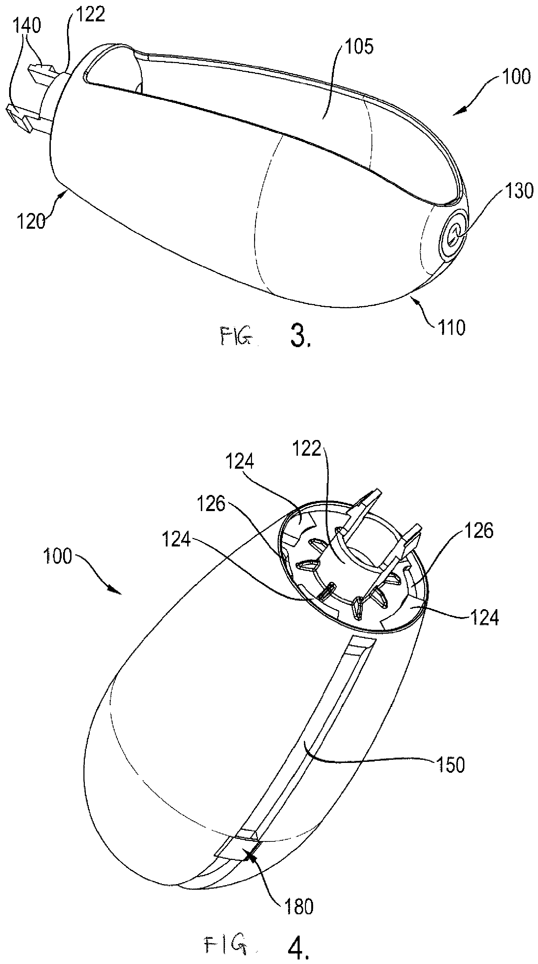

Figure 3. A view of the inner container
Figure 4. A view of the rear of the inner container

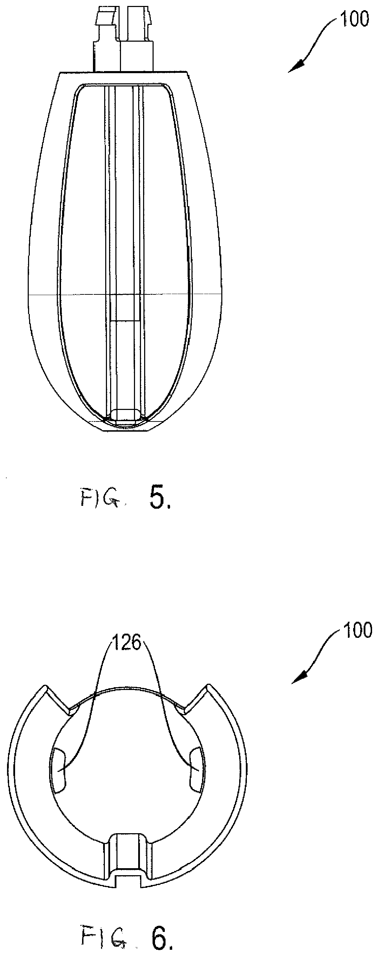

Figure 5. A view of the inner container opening
Figure 6. A view of an inner container section

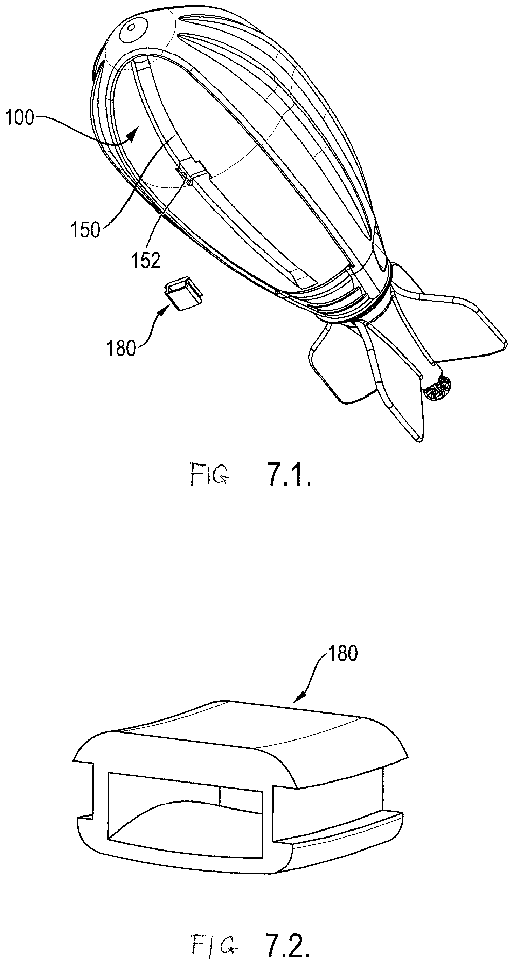

Figure 7.1. A view of the position of the channel for directing water flow
Figure 7.2. A view of wings

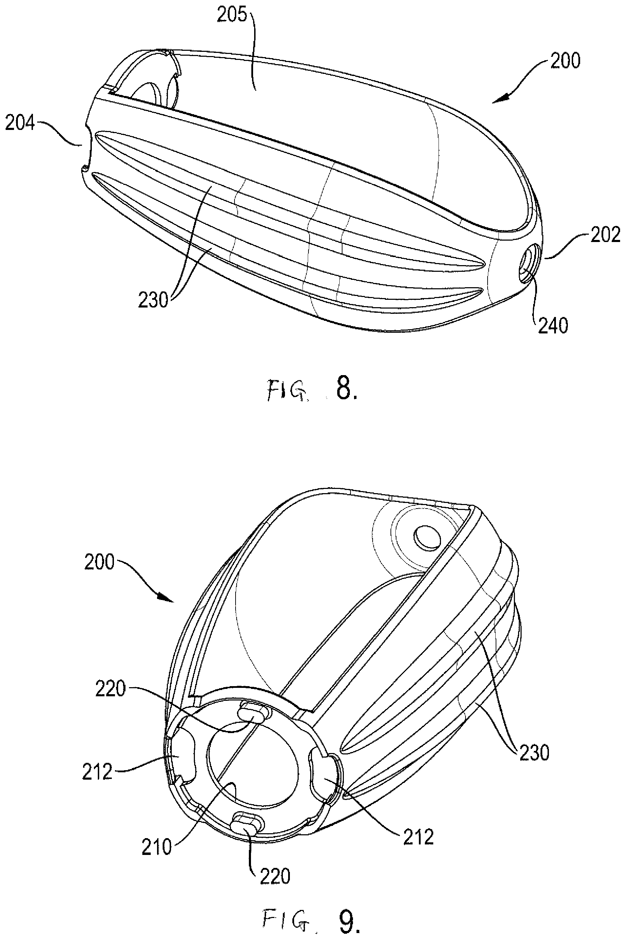

Figure 8. A view of the outer container
Figure 9. A view of the rear of the outer container

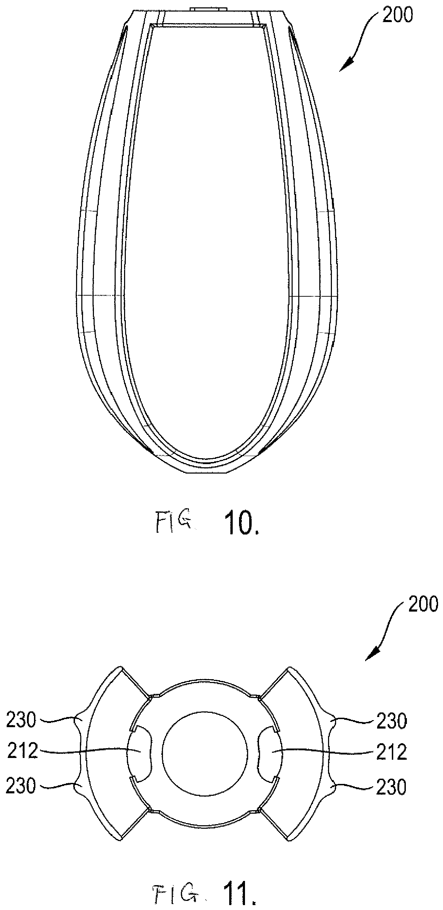

Figure 10. A view of the outer container opening
Figure 11. A view of an outer container section

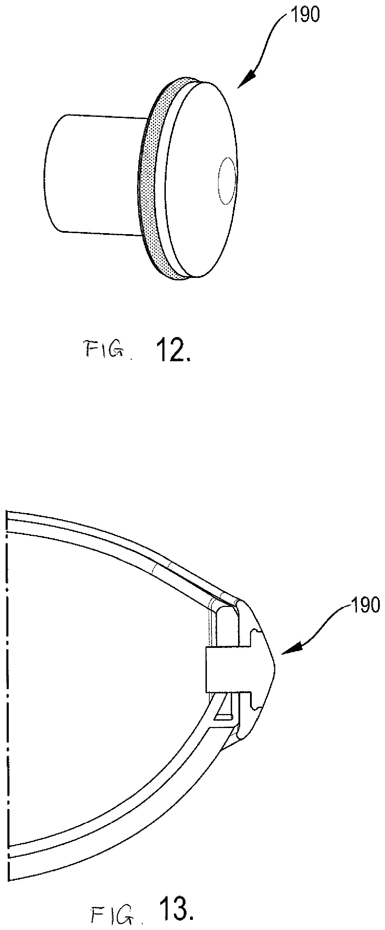

Figure 12. A view of the plug
Figure 13. A view of the plug position in the device for casting baits in fishing

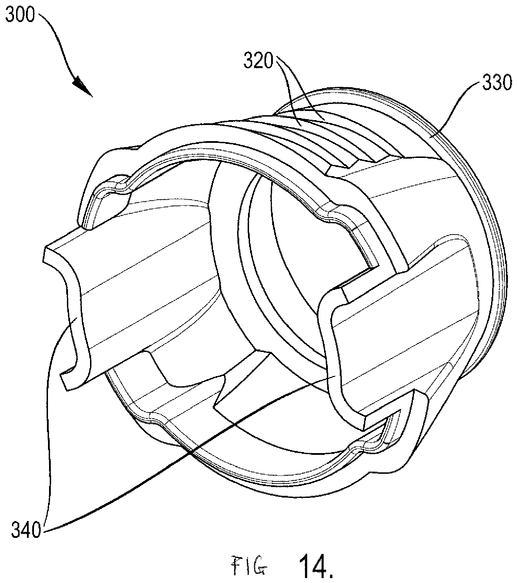

Figure 14. A view of the trigger

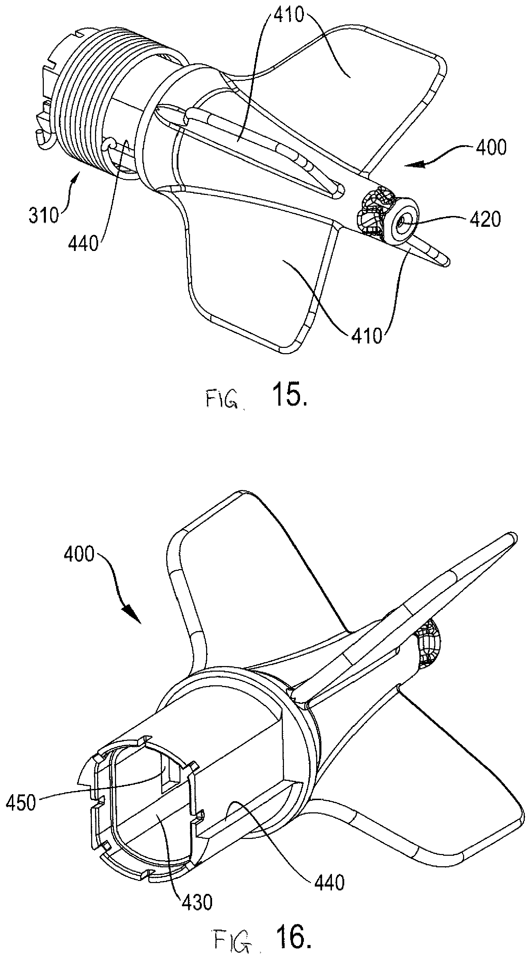

Figure 15. A view of a tail detail with the torsion spring
Figure 16. A view of the chamber in the tail

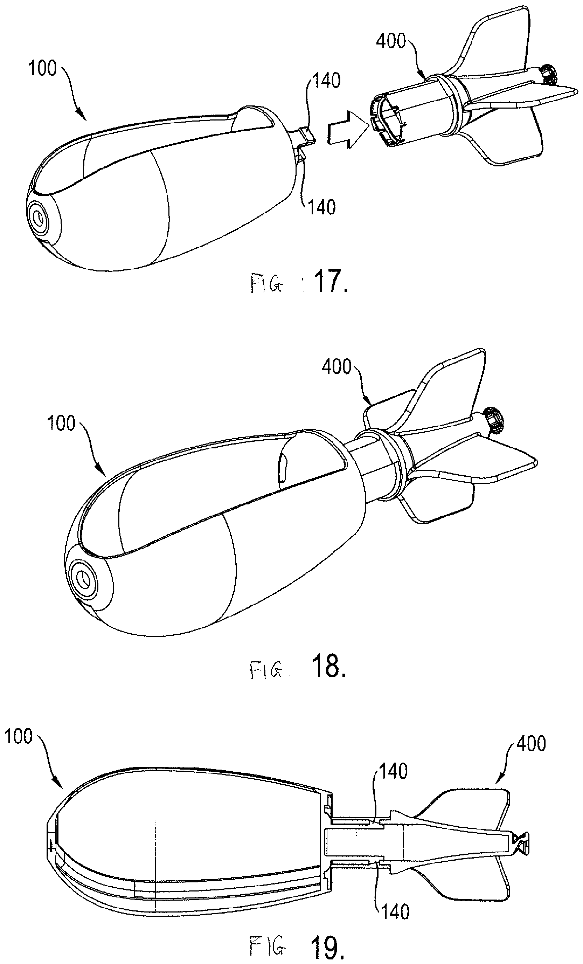

Figure 17. A view of the method of joining the tail and the inner container
Figure 18. A view of the tail and inner container joint
Figure 19. A view of a section of the tail and inner container joint

### A LIST OF REFERENCE SIGNS USED IN DRAWINGS

100- inner container
105- inner container opening
110- the front part of the inner container
120- the rear of the inner container
122- tail reception
124- ramp
126- opening at the rear of the inner container
130- plug opening on the inner container
140- hooks at the rear
150- channel for directing water flow
152- wing seat
180- wing
190- plug
200- outer container
202- the front part of the outer container
204- the rear of the outer container
205- outer container opening
210- central opening at the rear of the outer container
212- edge opening at the rear of the outer container
220- anchor pin
230- rib on the outer container
240- plug opening on the outer container
300- trigger
310- torsion spring
320- rib
330- ring
340- trigger extension
350- compression spring
360- seal ring
400- tail
410- tail fin
420- tail opening
430- chamber
440- groove for the torsion spring
450- reception for the inner container

### DETAILED DESCRIPTION OF AT LEAST ONE WAY OF CARRYING OUT THE INVENTION

The device for casting baits in fishing 1 disclosed herein is made in such a way that it is assembled from plastic parts which are made by injecting plastic and several metal parts, mostly springs. By plastic injection, the inner container 100, the plug 190, the outer container 200, the trigger 300, and the tail 400 are made. In one embodiment polypropylene is used as plastic. The seal ring 360 is made of rubber with an approx. 1 mm diameter, while the diameter of the entire seal ring is 22 mm (also called o-ring). The torsion spring 310 is in one embodiment made of stainless steel wires 1.2 mm thick, 25.5 mm outer diameter with a total of 9 or 10 windings, height approx. 13 mm, wherein the windings do not touch each other. The ends of the spring are bent 180 degrees, the lower part of the spring outwards and the upper part of the spring inwards.

The compression spring 350 is in one embodiment made of stainless steel wires 0.8 mm thick, a spring outer diameter of 23 mm, with a total of 4 windings with sanded ends, in the relaxed state the spring is 10 mm high. In some further embodiment, a 0.6 or 1 mm thick wire can be used for the compression spring 350.

The inner container 100 and the outer container 200 have an elongated aerodynamic shape. The outer container in this embodiment has at least one rib on the outer container 230 which enables a safer holding in the hand, and in some other embodiments, it may have multiple ribs 230. Each container has a front part 110,202 and a rear part 120,204. The inner container has a lateral opening for placing baits 105, whereas on the opposite lateral sides of the outer container 200 there is a single opening of the outer container 205 designed on each side through which the inner container 100 can also be inserted into the outer container 200. When the inner container 100 is in the outer container 200, the inner container 100 can be rotated inside the outer container 200 so that the inner container 100 can be in a position to close the outer container opening 205 for placing baits. The openings on containers 105,205 are approximately the same shape. The tail 400 has at least three designed fins 410, contains a chamber 430, and a reception for the inner container 450 on which a groove for the torsion spring 440 is designed. Via the reception for the inner container 450, the inner container 100 and the tail 400 are connected when the inner container 100 is inside the outer container 200. The tail 400 has an opening 420 at the other end.

The inner container 100 has a tail reception 122 designed at its rear 120 that emerges elongated from the rear of the inner container outwards in the direction of the axis of the inner container 100. There are at least two hooks 140 designed at the tail reception 122 that connect the tail 400 and the inner container 100. The hooks 140 are attached to the reception for the inner container 450. The outer container 200 has an opening 210 designed at the rear of the outer container 204 through which the tail reception 122 comes out of the outer container 200.

The trigger 300 is designed in the shape of a narrow cone with a ring 330 and it contains four grooves 320 and two trigger extensions 340. The seal ring 360, the torsion spring 310, the trigger 300, and the compression spring 350 are interposed between the inner container 100 and the tail 400 so that the reception for the inner container 450 passes through them. There is a torsion spring 310 attached to the groove for the torsion spring 440 and an anchor pin 220 between the trigger 300 and the outer container 200. There is a compression spring 350 between the trigger 300 and the tail 400, while the seal ring 360 is between the rear of the inner container 120 and the tail 400.

There are four symmetrically arranged ramps 124 at the rear of the inner container 100 made in the bulge shape along the rim of the rear part so that there is a space between them into which the trigger extensions 340 enter.

On the inner container 100 two openings are made at the rear of the inner container 126, while on the outer container 200 there are two edge openings made at the rear of the outer container 212, wherein these openings overlap when the device for casting baits is in the open position.

The device for casting baits in fishing 1 furthermore comprises a wing 180 with a water flow directing channel 150 being designed on the inner container 100 with a wing seat 152 into which the wing 180 is inserted. At the front of the inner container 110 and the front of the outer container 202, a plug opening 130,240 is made. The plug 190 is made so that it goes into the plug openings 130,240 and firmly fixes the inner container 100 with the outer container 200. After installation, the plug becomes a fixed part of the outer container, while the inner container rotates around its axis.

In one embodiment the inner container 100 and the outer container 200 have the shape of an elongated ellipsoid.

The inner container 100 is inserted into the outer container 200 in such a way that the rear part of the inner container is pressed into the outer container 200 at its widest part, at a 45-degrees angle, and is parallel pushed back and down until it jumps into the outer container. The dimension of the assembled device is approx. 30 cm in length, with a width of approximately 6-7 cm at its widest part. If the device is shorter, the width of the said usually decreases, approximately according to the ratio of 5:1.

In some other embodiments, this device can be shorter. For example, it can be between 10 and 20 cm long and at its widest part 3 to 8 cm wide in diameter.

Assembling of this device is carried out in such a way that the wing 180 is pressed into the wing seat 152 on the inner container 100. The inner container is then inserted into the outer container 200. Subsequently, the plug 190 is inserted into the plug opening on the outer container 240 and passes through the plug opening on the inner container 130. The seal ring 360 is put on the tail reception 122, thereafter the torsion spring 310 is inserted on the tail reception 122, then the trigger 300 is mounted, the compression spring 350 is inserted, the tail 300 is mounted, which is connected to the inner container by swaging and they become a single unit.

The device 1 is filled in its zero position (open position), after having filled the inner container with baits, the device is held in a fixed position with the left hand "only" by the outer container 200 (with fingers between the ribs), while the tail 400 is rotated clockwise by 90° with the right hand and by doing so the inner container 100 as well since the two parts are connected. When the requested position is reached, the trigger 300 pressurized by the compression spring 350 jumps into its position and thereby locks the current position (closed state) of the device. During 90° rotation, the torsion spring 310 is additionally strained, making the device 1 ready for casting. At the moment of the fall of the device onto the water, the water penetrates the trigger 300 ribs and creates a thrust on the ribs and the ring, and moves the trigger 300 towards the tail 400 and releases the tension of the torsion spring, as a result of which the inner container rotates into the zero position and the device contents are emptied into the water. When the device is retrieved back to the bank, the water flows through the holes on the outer container and additionally flushes the inner container 100 from the remaining feed/baits if any.

## Claims

1. A device for casting baits in fishing (1) **characterized in that** it contains an inner container (100) and an outer container (200), wherein both containers (100,200) have an elongated shape, and wherein each container has a front part (110,202) and the rear part (120,204), wherein the inner container has a lateral opening for placing baits (105,) and wherein on the opposite lateral sides of the outer container (200) there is an outer container opening (205) on each side through which the inner container (100) can be inserted into the outer container (200), and wherein the inner container (100) can be rotated inside the outer container (200) when the inner container (100) is located in the outer container (200) so that the inner container (100) can be in the position to close the outer container opening (205) for placing baits, and wherein the openings on the containers (105,205) are approximately the same shape, and wherein the containers (100,200) are inserted into each other so when this device is immersed under water, rotation of the inner container (100) inside the outer container (200) occurs and the bait is released from the inner container (100) into the water.

2. The device for casting baits in fishing (1) as claimed in claim 1, further **characterized in that** it comprises a tail (400), and the tail (400) has at least three or four designed tail fins (410), a chamber (430) and a reception for the inner container (450) on which the groove for the torsion spring (440) is designed, wherein the inner container (100) and the tail (400) are connected via reception for the inner container (450) when the inner container (100) is inside the outer container (200).

3. The device for casting baits in fishing (1) as claimed in claim 2, **characterized in that** the inner container (100) has a tail reception (122) at its rear (120) that emerges elongated from the rear of the inner container outwards in the direction of the axis of the inner container (100), wherein there are at least two hooks (140) designed at the tail reception (122), and wherein the tail (400) and the inner container (100) are connected with hooks (140) which are attached to the reception for the inner container (450), and wherein the outer container (200) has an opening (210) designed at the rear of the outer container (204) through which the tail reception (122) emerges from the outer container (200).

4. The device for casting baits in fishing (1) as claimed in claim 3, further **characterized in that** it comprises a trigger (300) made in the shape of a narrow cone with a ring (330), four grooves (320), and two trigger extensions (340), a seal ring (360), a torsion spring (310), and a compression spring (350) which are interposed between the outer container (200) and the tail (400) so that the reception for the inner container (450) passes through them, wherein there is a torsion spring (310) between the trigger (300) and the outer container (200) attached to the groove for the torsion spring (440) and to the anchor pin (220), and there is a compression spring (350) between the trigger (300) and the tail (400), while the seal ring (360) is between the rear of the inner container (120) and the tail (400).

5. The device for casting baits in fishing (1) as claimed in claim 4, **characterized in that** the inner container (100) contains four symmetrically arranged ramps (124) at its rear made in the bulge shape along the rim of the rear part so that there is a space between them into which the trigger extensions (340) enter, wherein when the tail (400) is rotated by the use of force concerning the inner container (100), the trigger extensions (340) can cross over the ramps (124), wherein when the trigger extensions (340) are in the space between the two ramps (124), the device (1) is in a stable open or closed position.

6. The device for casting baits in fishing (1) as claimed in any of the previous claims, **characterized in that** the inner container (100) contains two openings at the rear of the inner container (126), and furthermore the outer container (200) contains two edge openings at the rear of the outer container (212), whereby these openings overlap when the device for casting baits is in the open position.

7. The device for casting baits in fishing (1) as claimed in any of the previous claims, **characterized in that** it further comprises a wing (180), wherein a channel for directing water flow (150) is made on the inner container (100) with a wing seat (152) into which the wing (180) is inserted.

8. The device for casting baits in fishing (1) as claimed in any of the previous claims, **characterized in that** on the front of the inner container (110) and the front of the outer container (202) one plug opening is made (130,240), wherein further this device contains a plug (190) so that the plug goes into the plug openings (130,240) and firmly fixes the inner container (100) with the outer container (200).

9. The device for casting baits in fishing (1) as claimed in any of the previous claims, **characterized in that** the inner container (100) and the outer container (200) have the shape of an elongated ellipsoid.

10. The device for casting baits in fishing (1) as claimed in any of the previous claims, **characterized in that** the inner container (100) and the outer container (200) are made of polypropylene.

11. The device for casting baits in fishing (1) as claimed in any of the previous claims, **characterized in that** the overall length is 30 cm and the ratio of width to length is up to approximately 5:1.

12. The device for casting baits in fishing (1) as claimed in any of the previous claims from 1 to 10, **characterized in that** the overall length is between 10 and 20 cm, and the width of the widest part is 3 to 8 cm in diameter.
